# EUROPEAN PATENT SPECIFICATION

(11) **EP 3 578 826 B1**
(45) Date of publication and mention of the grant of the patent: **26.01.2022**
(21) Application number: 19175162.7
(22) Date of filing: 17.05.2019
(51) Int. Cl.: F04D 29/42, F04D 29/70, B60H 1/00

(54) **BLOWER**
GEBLÄSE
VENTILATEUR

(30) Priority: 05.06.2018 JP 2018107990
(43) Date of publication of application: 11.12.2019
(73) Proprietor: Valeo Japan Co., Ltd., Kumagaya-shi, Saitama 360-0193 (JP)
(72) Inventor: ARAKI, Daisuke, SAITAMA, 360-0193 (JP)
(74) Representative: Valeo Systèmes Thermiques

(56) References cited:
- EP-A1- 3 447 300
- WO-A1-2017/163631
- WO-A1-2018/074339

## Description

### BACKGROUND OF THE INVENTION

### 1. Field of the Invention

The present invention relates to a blower used in a two-layer flow type vehicle air conditioner.

### 2. Description of the Related Art

In the field of vehicle air conditioners, a two-layer flow type air conditioner is known (refer to, for example, Patent Literature 1 or 2) . The two-layer flow type air conditioner has a blower, a heat exchange section that performs conditioning (cooling, heating, dehumidification, and the like) of air fed from the blower, and an air distribution section that distributes the conditioned-air into a cabin. The blower has a scroll housing and an air intake housing. The air intake housing is provided with at least one outside air intake, at least one inside air intake, and at least one switching door that opens and closes the outside air intake and the inside air intake. An upper airflow passage and a lower airflow passage divided by a separation wall are formed in a peripheral edge portion of the scroll housing.

In a case of a single suction type blower, the scroll housing has only one inlet port called bell mouth and a separation tube is inserted into this inlet port. When the air conditioner is operated in a two-layer flow mode, then outside air from the outside air intake is introduced into the scroll housing through an outer side of the separation tube in the inlet port, and inside air from the inside air intake is introduced into the scroll housing through an inner side of the separation tube. The outside air is fed to the air distribution section through the upper airflow passage of the scroll housing and the upper airflow passage of the heat exchange section, while the inside air is fed to the air distribution section through the lower airflow passage of the scroll housing and the lower airflow passage of the heat exchange section.

In the single suction type blower for two-layer flow generation described above, an inside air passage (on the inner side of the separation tube) and an outside air passage (on the outer side of the separation tube) are provided by dividing one inlet port having a limited opening area by the separation tube. Since an airflow resistance increases in proportional to the square of a flow velocity, it is difficult to increase a blast volume without upsizing the scroll housing in the blower configured as described above.

Patent Literature 1: JP-A-2000-203235
Patent Literature 2: WO2018/074339A

### SUMMARY OF THE INVENTION

An object of the present invention is to provide a blower configured to divide an inlet port of a scroll housing by a separation tube, and to be capable of increasing a maximum blast volume of the blower during operation in a two-layer flow mode.

According to one embodiment of the present invention, a blower used in a vehicle air conditioner is provided, the blower including: an impeller including a plurality of blades that form a peripheral cascade and driven to rotate by a rotary shaft of a motor, the plurality of blades having a first axial portion adjacent to the motor in an axial direction of the rotary shaft and a second axial portion farther from the motor than the first axial portion; a scroll housing including an internal space that accommodates the impeller, an inlet port opening in the axial direction of the rotary shaft, and a delivery port opening in a peripheral direction of the impeller; a partition wall that splits a region between an inner peripheral surface of the scroll housing and an outer peripheral surface of the impeller and an internal space of the delivery port in the internal space of the scroll housing in the axial direction to form a first airflow passage and a second airflow passage; an air intake housing having an internal space communicating with the inlet port of the scroll housing, at least one outside air intake for taking in outside air into the internal space of the air intake housing and at least one inside air intake for taking in inside air into the internal space of the air intake housing being provided in the air intake housing; at least one switching door that opens and closes the outside air intake and the inside air intake; a separation tube extending through the inlet port of the scroll housing, the separation tube including an inflow opening in the air intake housing for flowing air into the separation tube and an outflow opening inside of the peripheral cascade of the impeller within the scroll housing for flowing out the air from within the separation tube, and the separation tube being configured such that the air introduced into the scroll housing via the outflow opening of the separation tube is guided to the first airflow passage of the scroll housing via the first axial portion of the blades of the impeller, and that the air introduced into the scroll housing through an outer side of the separation tube and an inner side of the inlet port is guided to the second airflow passage via the second axial portion of the blades of the impeller; and a cone section that is provided in the impeller and that turns the air flowing from the outflow opening of the separation tube to an inner side of the peripheral cascade of the impeller toward the first axial portion of the blades of the impeller.

This blower further includes: at least one auxiliary inside air inlet provided in at least one of the scroll housing and the air intake housing; and an auxiliary inside air passage introducing the inside air introduced from the auxiliary inside air inlet to a region within the scroll housing farther from the inlet port than the cone section on the inner side of the circumferential cascade of the impeller.

According to the embodiment of the present invention, when the air conditioner is operated in the two-layer flow mode, the inside air is introduced into the scroll housing not only through the inner side of the separation tube but also through the auxiliary inside air passage. Thus, even if a flow passage cross-sectional area in the separation tube is reduced, it is possible to keep a flow rate of the inside air introduced into the scroll housing. A cross-sectional area of a region (through which the outside air passes) on the outer side of the separation tube in the inlet port of the scroll housing can be increased by as much as a reduction in the internal flow passage cross-sectional area of the separation tube. Thus, it is possible to increase a maximum flow rate of the outside air delivered from the blower in the two-layer flow mode without reducing a maximum flow rate of the inside air delivered from the blower. Furthermore, providing the auxiliary inside air passage facilitates introducing the inside air into the scroll housing, and it is possible to increase the maximum flow rate of the inside air delivered from the blower without reducing the maximum flow rate of the outside air delivered from the blower.

### BRIEF DESCRIPTION OF THE DRAWINGS

FIG. 1 is a perspective view of a blower according to one embodiment of the present invention from obliquely upward.
FIG. 2 is a perspective view of the blower from obliquely downward.
FIG. 3 is a schematic meridional cross-sectional view of the blower, which is a cross-sectional view thereof taken generally along a line III-III depicted in FIG. 5A.
FIG. 4 is a schematic meridional cross-sectional view which is obtained by cutting the blower by a cutting plane orthogonal to a cutting plane of FIG. 3, and which is a cross-sectional view thereof taken generally along a line IV-IV depicted in FIG. 5A.
FIG. 5A is a schematic cross-sectional view of the blower taken along a line VA-VA of FIG. 3 in a state of removing a filter.
FIG. 5B is a schematic cross-sectional view of the blower taken along a line VB-VB of FIG. 3.
FIG. 6 is a schematic meridional cross-sectional view of a blower according to another embodiment of the present invention.

### DESCRIPTION OF THE PREFERRED EMBODIMENTS

An embodiment of a blower according to the present invention will be described hereinafter with reference to FIGS . 1, 2, 3, 4, 5A, and 5B. The blower according to the embodiment is configured as a centrifugal blower used in a two-layer flow type vehicle air conditioner. In each drawing, R signifies a rightward direction of a vehicle, L signifies a leftward direction of the vehicle, Fr signifies a frontward direction of the vehicle, Rr signifies a rearward direction of the vehicle, U signifies an upward direction of the vehicle, and D signifies a downward direction of the vehicle. It should be noted, however, that an installation direction of the centrifugal blower with respect to the vehicle is not limited to an example depicted in the drawings.

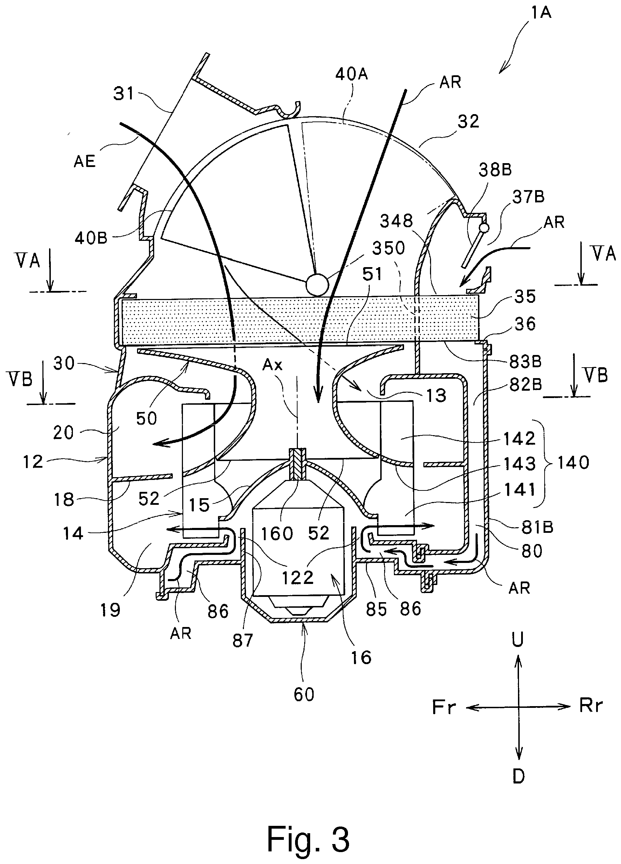

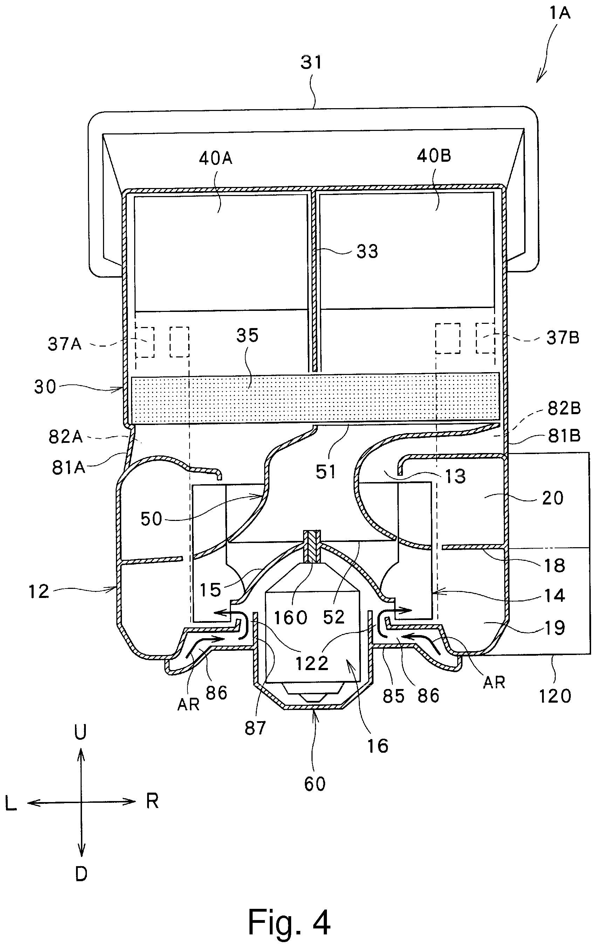

As depicted in FIGS. 3 and 4, a centrifugal blower 1A has an impeller 14. The impeller 14 has a plurality of blades 140 that are disposed in an outer peripheral portion of the impeller 14 to form a cascade arranged in a peripheral direction. The impeller 14 is driven by a motor 16 to rotate about a rotation axis Ax, and blasts out air, which is drawn in a radially inward space of the cascade of the impeller 14 from axially upward (axially one end side), radially outward.

In the present specification, a direction of the rotation axis Ax of the motor 16 and the impeller 14 is referred to as "axial direction" for the sake of convenience. In the following description, the present invention will be described on the premise that the axial direction matches a vertical direction; however, it should be also noted that the air conditioner is often incorporated into a vehicle at an angle formed between the axial direction and the vertical direction. In the present specification, unless specified otherwise, a direction of a radius of a circle described on a plane orthogonal to the rotation axis Ax about an arbitrary point on the rotation axis Ax is referred to as "radial direction" and a circumferential direction of the circle is referred to as "peripheral direction" or "circumferential direction".

The impeller 14 includes a cone section (inner deflection member) 15 integral molded with the impeller 14. The cone section 15 is a body of revolution in a geometrical sense. A rotary shaft 160 of the motor 16 is coupled to the impeller 14 in a central portion of the cone section 15.

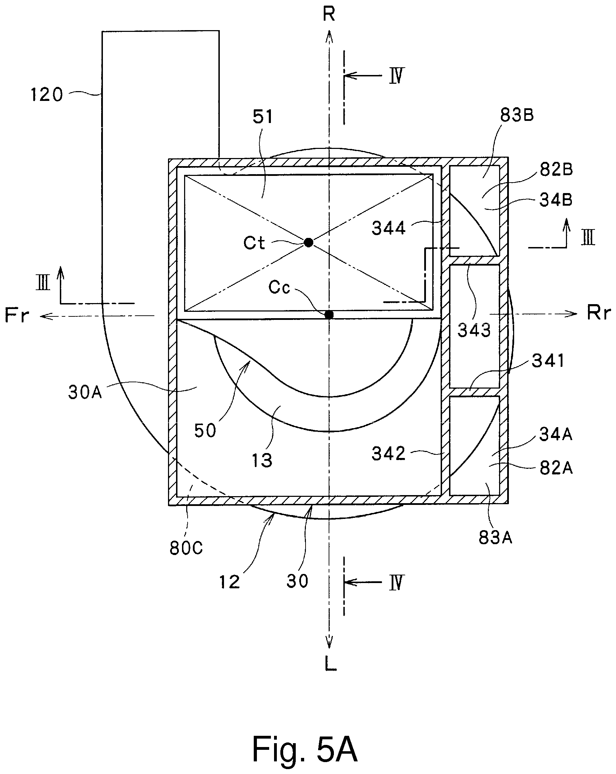

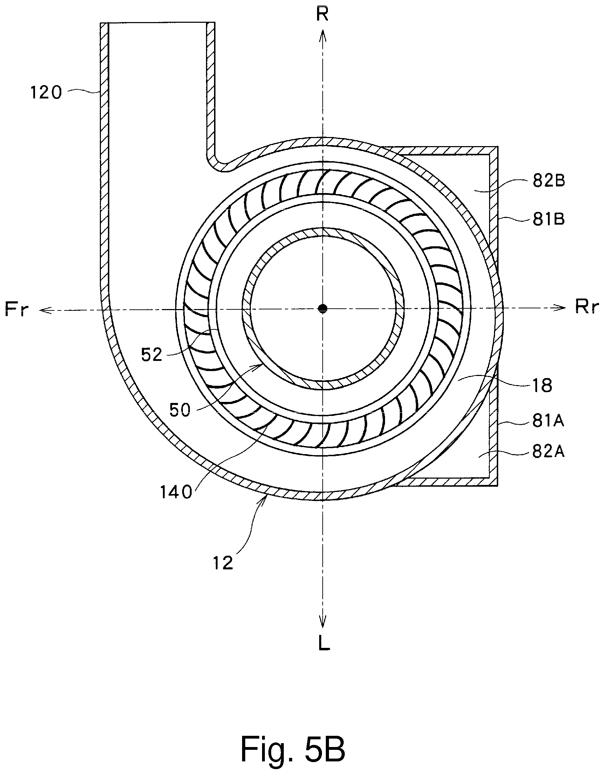

The impeller 14 is accommodated within a scroll housing 12. The scroll housing 12 has an inlet port 13 opening axially upward and a delivery port 120 (refer to FIGS. 5A and 5B). As depicted in FIGS. 4, 5A, and 5B, in a case of viewing the scroll housing 12 from the axis direction, the delivery port 120 extends generally in a tangential direction of an outer peripheral surface of the scroll housing 12. The delivery port 120 is invisible in FIG. 3.

The scroll housing 12 has a partition wall 18 that extends radially inward from an outer peripheral wall of the scroll housing 12. This partition wall 18 axially (vertically) splits a region between an inner peripheral surface of the scroll housing 12 and an outer peripheral surface of the impeller 14 in an internal space of the scroll housing 12, thereby forming a lower first airflow passage 19 and an upper second airflow passage 20 extending along the outer peripheral wall of the scroll housing 12 in the peripheral direction.

As well known in the art, a heat exchange section (section that performs air conditioning by cooling and/or heating by a heat exchanger, an electric heater, or the like), which is not depicted, and an air distribution section (section that regulates blast and distribution of the conditioned air from a plurality of diffusers into a cabin) which have a configuration adapted to a two-layer flow type are provided downstream of the centrifugal blower. A combination of the centrifugal blower, the heat exchange section, and the air distribution section configures the vehicle air conditioner. While the heat exchange section and the air distribution section are integrated to configure a heat exchange/air distribution unit in many cases, the heat exchange section and the air distribution section may be configured as separate units. The air flowing from the lower first airflow passage 19 within the scroll housing 12 passes through a lower airflow path (not depicted) formed in the heat exchange section, while the air flowing from the upper second airflow passage 20 passes through an upper airflow path (not depicted) in the heat exchange section.

A lower portion of a separation tube 50 is inserted into the scroll housing 12 via the inlet port 13. As depicted in FIGS. 3 and 4, an upper end portion of the separation tube 50 is located outside of the scroll housing 12 (axially upward of the inlet port 13), and a lower end portion of the separation tube is located in a radially inward space of the cascade of the impeller 14.

As clear from FIGS. 5A and 5B, a shape (shape viewed from axially upward) of an inflow opening 51 on an upper end of the separation tube 50 is generally rectangular. A central portion (that is, portion located within the inlet port 13) of the separation tube 50 has a circular (or generally circular) cross-section. Therefore, a region, which is outside of the separation tube 50, of the inlet port 13 has a generally annular shape.

A cross-sectional shape of the separation tube 50 smoothly shifts from a rectangular shape to a circular shape from the upper end portion to the central portion. A position of a cross-sectional center of the separation tube 50 smoothly shifts from a cross-sectional center Ct of the upper end portion to a cross-sectional center Cc of the lower end portion. The lower end portion of the separation tube 50 has a flared shape having a diameter enlarged toward the lower end. An outflow opening 52 on the lower end of the separation tube 50 has a circular shape.

It is impossible or quite difficult, even if possible, to integrally mold the separation tube 50 having the shapes depicted in the drawings by a resin injection molding technique. It is, therefore, preferable to manufacture the separation tube 50 by coupling two or more pieces formed separately by injection molding by a technique such as bonding, fitting, or screwing. At least part of the separation tube 50 may be integrally molded with either at least part of the scroll housing 12 or at least part of an air intake housing 30, to be described later.

The separation tube 50 splits a flow of the air drawn in by suction into the scroll housing 12, into a first airflow that passes through the inner side of the separation tube 50 and that flows into a lower half portion (first axial portion) 141 of the cascade of the impeller 14 and a second airflow that passes through the outer side of the separation tube 50 and that flows into an upper half portion (second axial portion) 142 of the cascade of the impeller 14. The first airflow flowing out generally axially from the outflow opening 52 on the lower end of the separation tube 50 is turned to a radially outward flow by the cone section 15 and flows into the lower half portion (first axial portion) 141 of the cascade of the impeller 14. The second air flow passing through a portion, which is on the outer side of the separation tube 50, of the inlet port 13 of the scroll housing 12 is turned to a radially outward flow by the flared lower end portion of the separation tube 50 and flows into the upper half portion (second axial portion) 142 of the cascade of the impeller 14.

To improve separation of the first airflow from the second airflow, the blades 140 of the impeller 14 are bound by a separation band 143 extending in the circumferential direction to divide the lower half portion 141 from the upper half portion 142 of the blades.

The air intake housing 30 is coupled to an upper side of the scroll housing 12. The scroll housing 12 and the air intake housing 30 may be integrally molded or may be coupled together by the technique such as screwing, bonding, or fitting after separately producing the scroll housing 12 and the air intake housing 30. The scroll housing 12 and the air intake housing 30 form part of an air conditioner casing.

The air intake housing 30 has an outside air intake 31 opening generally forward and an inside air intake 32 opening generally rearward. The inside air intake 32 may be open generally leftward and rightward. The outside air intake 31 is coupled to an outlet of an outside air introduction path (not depicted) provided in the vehicle or in the vicinity of the outlet. The outside air (air taken in from outside of the vehicle) can be introduced into the air intake housing 30 via the outside air intake 31. The inside air intake 32 is open into the cabin of the vehicle and can introduce the inside air (cabin air) into the air intake housing 30.

A left switching door 40A and a right switching door 40B are provided side by side in a transverse direction in the air intake housing 30.

The left switching door 40A can be swung by an actuator, which is not depicted, between a first position at which the left switching door 40A opens a left half portion of the outside air intake 31 and closes a left half portion (meaning both a left half of an opening facing rearward and an opening facing leftward of the inside air intake 32, the same applies hereinafter) of the inside air intake 32, and a second position at which the left switching door 40A closes the left half portion of the outside air intake 31 and opens the left half portion of the inside air intake 32, about a swing axis extending in the transverse direction.

The right switching door 40B can be swung by an actuator, which is not depicted, between a first position at which the right switching door 40B opens a right half portion of the outside air intake 31 and closes a right half portion (meaning both a right half of an opening facing rearward and an opening facing rightward of the inside air intake 32, the same applies hereinafter) of the inside air intake 32, and a second position at which the right switching door 40B closes the right half portion of the outside air intake 31 and opens the right half portion of the inside air intake 32, about a swing axis collinear with the swing axis of the left switching door 40A.

The left switching door 40A and the right switching door 40B are each of a type called rotary door, and have a columnar shape having a fan-shaped bottom surface as a whole. Each of the switching doors (40A and 40B) has a peripheral surface having a circular arc cross-section about the swing axis and fan-shaped side surfaces connected to left and right sides of this peripheral surface. The peripheral surface blocks the outside air intake 31 (inside air intake 32), thereby closing the outside air intake 31 (inside air intake 32).

The right switching door 40B is located immediately on the inflow opening 51 on the upper end of the separation tube 50. The left switching door 40A is located immediately on a region that adjoins the inflow opening 51 leftward and that is a generally rectangular region in a view from upward within the air intake housing 30.

When the air conditioner is operated in a two-layer flow mode, the left switching door 40A is located at the first position and the right switching door 40B is located at the second position. At this time, inside air AR (refer to FIG. 3) introduced into the air intake housing 30 from the right half portion of the inside air intake 32 flows into the separation tube 50 from the inflow opening 51, while outside air AE (refer to FIG. 3) introduced into the air intake housing 30 from the left half portion of the outside air intake 31 flows through the outer side of the separation tube 50.

As depicted in FIG. 4, a separation wall 33 is provided between the left switching door 40A and the right switching door 40B. The separation wall 33 substantially prevents mixture of the outside air introduced from the outside air intake 31 and the inside air introduced from the inside air intake 32 within the air intake housing 30 when the air conditioner is operated in the two-layer flow mode.

When the air conditioner is operated in an outside air mode, both the left switching door 40A and the right switching door 40B are located at the first positions. At this time, only the outside air flows into the air intake housing 30. The outside air introduced into the air intake housing 30 from the right half portion of the outside air intake 31 flows into the separation tube 50 from the inflow opening 51, while the outside air introduced into the air intake housing 30 from the left half portion of the outside air intake 31 flows through the outer side of the separation tube 50.

When the air conditioner is operated in an inside air mode, both the left switching door 40A and the right switching door 40B are located at the second positions. At this time, only the inside air flows into the air intake housing 30. The inside air introduced into the air intake housing 30 from the right half portion of the inside air intake 32 flows into the separation tube 50 from the inflow opening 51, while the inside air introduced into the air intake housing 30 from the left half portion of the inside air intake 32 flows through the outer side of the separation tube 50.

A filter 35 that removes contaminants such as dust and particles contained in the air and an unusual odor is provided between a region where the outside air intake 31 and the inside air intake 32 are provided and the inflow opening 51 on the upper end of the separation tube 50 within the air intake housing 30. The filter 35 is inserted into a filter support section 36 that is provided within the air intake housing 30 and that is formed from a slot or a rail, and is held at a position adjacent to the inflow opening 51 of the separation tube 50.

Auxiliary inside air inlets 37A and 37B are provided on a rear surface of the air intake housing 30 slightly downward of the inside air intake 32 and upward of the filter 35.

The blower has an auxiliary inside air passage 80 that introduces the inside air AR (refer to FIG. 3) introduced into the air intake housing 30 via the auxiliary inside air inlets 37A and 37B to a region inside of the peripheral cascade of the impeller 14 and farther from the inlet port 13 than the cone section 15 in an internal space of the scroll housing 12. The auxiliary inside air passage 80 is formed, as described in detail below, integrally with the scroll housing 12, or formed separately from the scroll housing 12 and then formed by side covers 81A and 81B and a bottom cover 85 attached to the scroll housing 12.

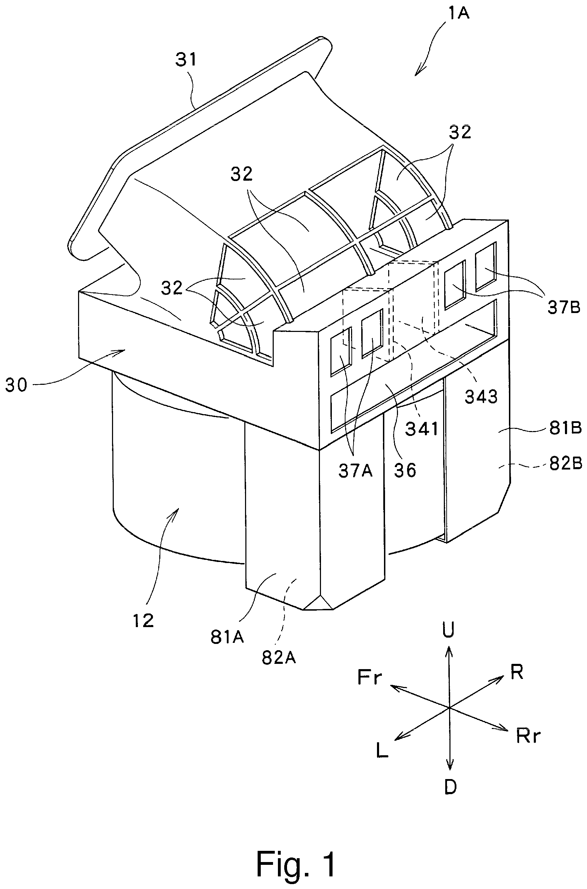

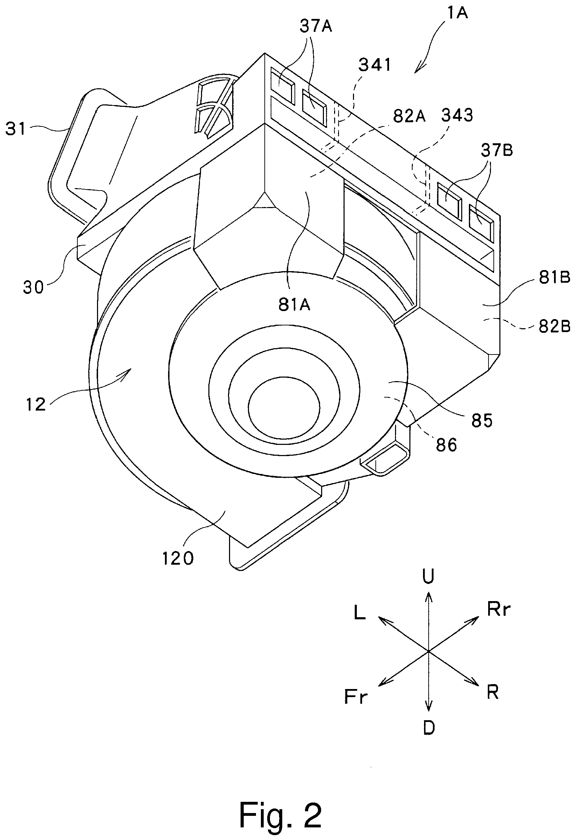

As depicted particularly in FIGS. 1 and 2, the side covers 81A and 81B extending downward from rear-side two corner portions of the air intake housing 30 that is generally quadrangular in a view from upward are attached to an outer peripheral wall surface of the scroll housing 12. At least part of the side covers 81A and 81B may be integrally molded with the scroll housing 12. While the side covers 81A and 81B, which overlap an outer wall of the air intake housing 30 near the corner portions, are invisible in FIG. 5A, the side covers 81A and 81B are visible in FIG. 5B. Spaces between the side covers 81A and 81B and a side wall of the scroll housing 12 configure upstream passage portions 82A and 82B of the auxiliary inside air passage 80. It is to be noted that the filter 35 is not depicted in FIG. 5A.

An outer wall surface of the scroll housing 12 has contours generally corresponding to those of part of a planar spiral in a view from directly above. The outer wall surface of the air intake housing 30 has generally rectangular contours in a view from directly above. In a view from directly above, the corner portions of the rectangular contours of the air intake housing 30 protrude from the contours of the planar spiral of the scroll housing 12. The side covers 81A and 81B are provided in the protruding portions. In a view from directly above, the contours of the outer wall surfaces of the side covers 81A and 81B generally match those of the outer wall surface of the air intake housing 30. Since the upstream passage portions 82A and 82B of the auxiliary inside air passage 80 are provided using a dead space of the blower as described above, providing the upstream passage portions 82A and 82B does not result in a substantial increase in an occupation space of the blower.

As depicted in FIG. 5A, a plurality of vertical isolation walls 341, 342, 343, and 344 forming isolated spaces 34A and 34B that surround regions adjacent to the auxiliary inside air inlets 37A and 37B, respectively in the internal space of the air intake housing 30 and that have generally rectangular cross-sectional shapes within the air intake housing 30 are provided. Lower ends of the vertical isolation walls 341, 342, 343, and 344 adjoin an upper surface (inflow surface) of the filter 35.

Since the isolated spaces 34A and 34B are isolated from a main space 30A in the air intake housing 30 by the isolation walls 341, 342, 343, and 344, the inside air flowing into the isolated spaces 34A and 34B does not substantially flow into the main space 30A upward of the filter 35. It is noted that the main space 30A means the internal space of the air intake housing 30 into which the air introduced from the outside air intake 31 and the inside air intake 32 flows.

Cross-sectional shapes (except for those near upper end portions) of the upstream passage portions 82A and 82B of the auxiliary inside air passage 80 can be understood from FIG. 5B. Generally rectangular openings 83A and 83B adjoining a lower surface (outflow surface) of the filter 35 are formed on upper ends of the upstream passage portions 82A and 82B. The cross-sectional shapes of the upstream passage portions 82A and 82B of the auxiliary inside air passage 80 change from the shapes depicted in FIG. 5B to rectangular shapes near the upper end portions of the upstream passage portions 82A and 82B. In a view from above, contours of the openings 83A and 83B generally match those of lower ends of the isolated spaces 34A and 34B.

When passing through the filter 35, part of the inside air flowing from the auxiliary inside air inlets 37A and 37B toward the upstream passage portions 82A and 82B of the auxiliary inside air passage 80 possibly flows in a direction of crossing the filter 35 and possibly flows out into the main space within the air intake housing 30. To prevent or suppress this phenomenon, a partition 350 (refer to FIG. 3) extending over a thickness direction of the filter 35 is preferably provided in the filter 35. Preferably, contours of a space within the filter 35 surrounded by this partition 350 generally match those of the openings 83A and 83B and those of the lower ends of the isolated spaces 34A and 34B in a view from above.

As depicted in FIGS. 3 and 4, a downstream passage portion 86 of the auxiliary inside air passage 80 is formed between the bottom cover 85 and a bottom wall of the scroll housing 12. The bottom cover 85 is also coupled to the side covers 81A and 81B, and the inside air flowing from the upstream passage portions 82A and 82B flows into the downstream passage portion 86.

As depicted in FIG. 3, a peripheral wall 87 that defines a motor storage space for storing the motor 16 is formed in a central portion of the bottom cover 85. The motor 16 is supported by the scroll housing 12 via a bottom cover 60 firmly fixed to the bottom wall of the scroll housing 12.

The downstream passage portion 86 of the auxiliary inside air passage 80 is an annular space formed around the peripheral wall 87 of the bottom cover 85. A plurality of openings 122 are provided in the bottom wall of the scroll housing 12 to be spaced apart in the circumferential direction. The inside air AR (refer to FIG. 3) within the downstream passage portion 86 flows through the openings 122 into a space downward of the cone section 15 within the scroll housing 12.

An outer peripheral edge of the cone section 15 is connected to the blades 140 at a position slightly upward of a lower end portion of the first axial portion 141 of the blades 140 of the impeller 14. Therefore, the air (inside air or outside air) passing through the separation tube 50 passes by an upper region of the first axial portion 141 of the blades 141. On the other hand, the inside air introduced from the auxiliary inside air inlets 37A and 37B passes by a lower region of the first axial portion 141.

When the air conditioner is operated in the two-layer flow mode, the inside air is introduced into the scroll housing 12 not only through a main route from the inside air intake 32 to an upper portion of the first axial portion 141 of the blades 140 by way of the separation tube 50 but also through a sub route from the auxiliary inside air inlets 37A and 37B to a lower portion of the first axial portions 141 of the blades 140 by way of the upstream passage portions 82A and 82B and the downstream passage portion 86 of the auxiliary inside air passage 80 and the openings 122. In other words, the flow of the inside air introduced into the scroll housing 12 without passing through the inlet port 13 of the scroll housing 12 is present.

Owing to this, it is possible to reduce an inside diameter of the separation tube 50 (inside diameter thereof particularly near the inlet port 13 of the scroll housing 12) while keeping a total flow rate of the inside air taken in into the scroll housing 12 to a necessary level. If the inside diameter of the separation tube 50 is reduced, then the airflow resistance of the separation tube 50 increases and the flow rate of the inside air flowing through the separation tube 50 is reduced; however, the inside air introduced into the scroll housing 12 through the sub route can compensate for a reduced flow rate.

Reducing the inside diameter of the separation tube 50 makes it possible to increase an area of the region, on the outer side of the separation tube 50, of the inlet port 13. It is, therefore, possible to increase a flow rate of the outside air introduced into the scroll housing 12 and eventually increase a maximum blast volume of the blower.

The inside diameter of the separation tube 50 may be set to the same value as a conventionally designed value without reducing the inside diameter of the separation tube 50. In this case, it is possible to increase the flow rate of the inside air introduced into the scroll housing 12 by as much as the flow rate of the inside air introduced via the sub route and eventually increase the maximum total blast volume of the blower while keeping the flow rate of the inside air and the flow rate of the outside air introduced into the scroll housing 12 to necessary levels similar to conventionally designed levels.

Furthermore, a cross-sectional area of the separation tube 50 may be reduced by a value smaller than a cross-sectional area of the sub route. In this case, it is possible to increase both the flow rate of the inside air and the flow rate of the outside air introduced into the scroll housing 12 and eventually increase the maximum total blast volume of the blower.

As described above, by providing the sub route, only the total flow rate of the inside air introduced into the scroll housing 12 may be increased, only the total flow rate of the outside air introduced into the scroll housing 12 may be increased, or the total flow rate of the inside air and the total flow rate of the outside air introduced into the scroll housing 12 may be increased.

It is noted that not only the air flowing into the scroll housing 12 through the main route but also the air flowing into the scroll housing 12 through the sub route pass through the filter 35 in the embodiment. This can enhance cleanliness of the air blasted out from the blower.

As depicted in FIG. 3, the blower 1A may be configured such that valves 38A and 38B are provided in the auxiliary inside air inlets 37A and 37B and that the valves 38A and 38B are opened only in a case in which a difference P1-P2 between a pressure P1 of the outer side of the air intake housing 30 near the auxiliary inside air inlets 37A and 37B and an internal pressure P2 of the isolated spaces 34A and 34B exceeds a certain threshold. For example, reed valves can be used as such valves 38A and 38B.

The valves 38A and 38B are not necessarily provided. In other words, the auxiliary inside air inlets 37A and 37B may be always opened.

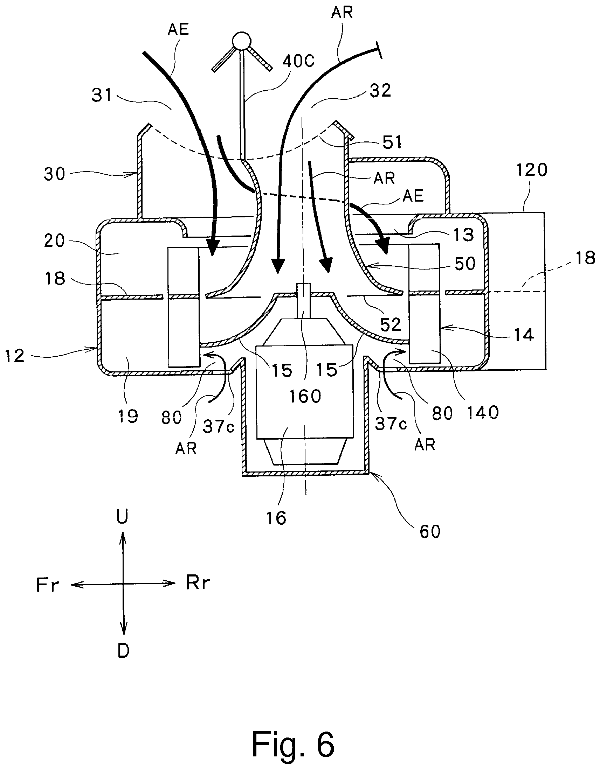

While the auxiliary inside air inlets 37A and 37B are provided upward of the scroll housing 12 in the embodiment, the present invention is not limited to this example and auxiliary inside air inlets 37C may be provided in the bottom wall of the scroll housing 12 as depicted in FIG. 6. In this case, a space from the auxiliary inside air inlets 37C to the lower end portions of the blades 140 within the scroll housing 12 is regarded as an auxiliary inside air passage.

Furthermore, at least one switching door that opens and closes the air intake housing and the outside air intake and the inside air intake of the air intake housing is not limited to those depicted in FIGS. 1 to 5 but may be one depicted in FIG. 6.

In FIG. 6, constituent elements having same or similar functions to those of the constituent elements in the embodiment of FIGS. 1 to 5B are denoted by the same reference numerals and signs. In an embodiment of FIG. 6, a plate-like single switching door 40C rotating about a rotation axis opens and closes one outside air intake 31 and one inside air intake 32. FIG. 6 depicts a state in which the air conditioner is operated in the two-layer flow mode, and depicts a state in which the outside air AE is introduced from the outside air intake 31 into the air intake housing 30 and then flows in the outer side of the separation tube 50 and in which the inside air AR is introduced from the inside air intake 32 into the air intake housing 30 and then flows in the inner side of the separation tube 50. It is noted that in the outside air mode, the switching door 40C is located at a position rotated generally 40 degrees counterclockwise from a position depicted in FIG. 6. In the inside air mode, the switching door 40C is located at a position rotated generally 40 degrees clockwise from the position depicted in FIG. 6.

### Description of Reference Numerals and Signs

- 12:: scroll housing
- 120:: delivery port
- 13:: inlet port
- 14:: impeller
- 140:: blade
- 141:: first axial portion
- 142:: second axial portion
- 15:: cone section
- 16:: motor
- 160:: rotary shaft
- 18:: partition wall
- 19:: first airflow passage
- 20:: second airflow passage
- 30:: air intake housing
- 31:: outside air intake
- 32:: inside air intake
- 37A, 37B, 37C:: auxiliary inside air inlet
- 40A, 40B, 40C:: switching door
- 50:: separation tube
- 51:: inflow opening
- 52:: outflow opening
- 80:: auxiliary inside air passage

## Claims

1. A blower used in a vehicle air conditioner, comprising:
an impeller (14) including a plurality of blades (140) that form a peripheral cascade and driven to rotate by a rotary shaft (160) of a motor (16), the plurality of blades having a first axial portion (141) adjacent to the motor in an axial direction of the rotary shaft and a second axial portion (142) farther from the motor than the first axial portion;
a scroll housing (12) including an internal space that accommodates the impeller (14), an inlet port (13) opening in the axial direction of the rotary shaft, and a delivery port (120) opening in a peripheral direction of the impeller;
a partition wall (18) that splits a region between an inner peripheral surface of the scroll housing and an outer peripheral surface of the impeller and an internal space of the delivery port (120) in the internal space of the scroll housing (12) in the axial direction to form a first airflow passage (19) and a second airflow passage (20);
an air intake housing (30) having an internal space communicating with the inlet port (13) of the scroll housing (12), at least one outside air intake (31) for taking in outside air into the internal space of the air intake housing and at least one inside air intake (32) for taking in inside air into the internal space of the air intake housing being provided in the air intake housing (30);
at least one switching door (40A, 40B, 40C) that opens and closes the outside air intake (31) and the inside air intake (32);
a separation tube (50) extending through the inlet port (13) of the scroll housing (12), the separation tube including an inflow opening (51) in the air intake housing (30) for flowing air into the separation tube and an outflow opening (52) inside of the peripheral cascade of the impeller (14) within the scroll housing (12) for flowing out the air from within the separation tube, and the separation tube (50) being configured such that the air introduced into the scroll housing (12) via the outflow opening (52) of the separation tube is guided to the first airflow passage (19) of the scroll housing (12) via the first axial portion (141) of the blades of the impeller (14), and that the air introduced into the scroll housing (12) through an outer side of the separation tube (50) and an inner side of the inlet port (13) is guided to the second airflow passage (20) via the second axial portion (142) of the blades of the impeller (14); and
a cone section (15) that is provided in the impeller (14) and that turns the air flowing from the outflow opening (52) of the separation tube (50) to an inner side of the peripheral cascade of the impeller (14) toward the first axial portion (141) of the blades of the impeller (14),
the blower **characterized by** further comprising:
at least one auxiliary inside air inlet (37A, 37B, 37C) provided in at least one of the scroll housing (12) and the air intake housing (30); and
an auxiliary inside air passage (80) introducing the inside air introduced from the auxiliary inside air inlet (37A, 37B, 37C) to a region within the scroll housing (12) farther from the inlet port (13) than the cone section (15) on the inner side of the peripheral cascade of the impeller (14).

2. The blower according to claim 1, wherein
the air intake housing (30) includes a filter support section (36) that supports a filter (35), the auxiliary inside air inlet (37A, 37B) is provided at a position at which the auxiliary inside air inlet (37A, 37B) can introduce the inside air into a space upstream of the filter supported by the filter support section within the air intake housing (30), and the inside air introduced from the auxiliary inside air inlet (37A, 37B) passes through the filter (35) and flows into the auxiliary inside air passage (80).

3. The blower according to claim 2, wherein
in a view from a direction of a rotation axis (Ax) of the impeller, a portion of the scroll housing (12) except for the delivery port (120) is generally spiral, the air intake housing (30) is generally quadrangular, three corner portions of the air intake housing (30) project outside of the scroll housing (12), and the auxiliary inside air passage (80) extends along an outer surface of the scroll housing (12) from at least one of the three corner portions of the air intake housing (30) projecting outside of the scroll housing (12).

4. The blower according to claim 3, wherein
the auxiliary inside air passage (80) includes two or three passage portions (82A, 82B), and the passage portions (82A, 82B) extend along the outer surface of the scroll housing (12) from two or three corner portions out of the three corner portions of the air intake housing (30) projecting outside of the scroll housing (12).

5. The blower according to claim 3, further comprising
the generally quadrangular filter (35) supported by the filter support section, wherein an opening (83A, 83B) is provided in an upstream end of the auxiliary inside air passage (80), and a partition member (350), which divides a corner region of the filter overlapping the opening (83A, 83B) from a center-side region present closer to a center side of the filter than the corner region in the view from the direction of the rotation axis (Ax) of the impeller, is provided in the filter (35).

## Patentansprüche

1. Gebläse, das in einer Fahrzeugklimaanlage verwendet wird, das Folgendes umfasst:
ein Laufrad (14), das mehrere Schaufeln (140) umfasst, die ein peripheres Schaufelgitter bilden und von einer Drehwelle (160) eines Motors (16) zur Drehung angetrieben werden, wobei die mehreren Schaufeln einen ersten axialen Abschnitt (141) neben dem Motor in einer axialen Richtung der Drehwelle und einen zweiten axialen Abschnitt (142) weiter von dem Motor weg als der erste axiale Abschnitt aufweisen;
ein Spiralgehäuse (12), das einen Innenraum, in dem das Laufrad (14) untergebracht ist, einen Einlasskanal (13), der in der axialen Richtung der Drehwelle offen ist, und einen Zufuhrkanal (120), der in einer Umfangsrichtung des Laufrads offen ist, umfasst;
eine Trennwand (18), die einen Bereich zwischen einer Innenumfangsfläche des Spiralgehäuses und einer Außenumfangsfläche des Laufrads und einen Innenraum des Zufuhrkanals (120) in dem Innenraum des Spiralgehäuses (12) in der axialen Richtung zur Bildung eines ersten Luftstromdurchgangs (19) und eines zweiten Luftstromdurchgangs (20) abtrennt;
ein Lufteinlassgehäuse (30) mit einem Innenraum, der mit dem Einlasskanal (13) des Spiralgehäuses (12) in Verbindung steht, mindestens einem Außenlufteinlass (31) zum Aufnehmen der Außenluft in den Innenraum des Lufteinlassgehäuses und mindestens einen Innenlufteinlass (32) zum Aufnehmen der Innenluft in den Innenraum des Lufteinlassgehäuses, der in dem Lufteinlassgehäuse (30) vorgesehen ist;
mindestens eine Schaltklappe (40A, 40B, 40C), die den Außenlufteinlass (31) und den Innenlufteinlass (32) öffnet und schließt;
ein Abtrennrohr (50), das sich durch den Einlasskanal (13) des Spiralgehäuses (12) hindurch erstreckt, wobei das Abtrennrohr eine Einströmöffnung (51) in dem Lufteinlassgehäuse (30) zum Einströmen von Luft in das Abtrennrohr und eine Ausströmöffnung (52) in dem peripheren Schaufelgitter des Laufrads (14) in dem Spiralgehäuse (12) zum Ausströmen der Luft aus dem Abtrennrohr umfasst, und wobei das Abtrennrohr (50) so konfiguriert ist, dass die in das Spiralgehäuse (12) über die Ausströmöffnung (52) des Abtrennrohrs eingeleitete Luft zu dem ersten Luftströmungsdurchgang (19) des Spiralgehäuse (12) über den ersten axialen Abschnitt (141) der Schaufeln des Laufrads (14) geleitet wird und dass die in das Spiralgehäuse (12) durch eine Außenseite des Abtrennrohrs (50) und eine Innenseite des Einlasskanals (13) eingeleitete Luft zu dem zweiten Luftströmungsdurchgang (20) über den zweiten axialen Abschnitt (142) der Schaufeln des Laufrads (14) geleitet wird; und
einen Kegelbereich (15), der in dem Laufrad (14) vorgesehen ist und der die aus der Ausströmöffnung (52) des Abtrennrohrs (50) zu einer Innenseite des peripheren Schaufelgitters des Laufrads (14) strömende Luft zu dem ersten axialen Abschnitt (141) der Schaufeln des Laufrads (14) wendet, wobei das Gebläse **dadurch gekennzeichnet ist, dass** es ferner Folgendes umfasst:
mindestens einen zusätzlichen Innenlufteinlass (37A, 37B, 37C), der in dem Spiralgehäuse (12) und/oder dem Lufteinlassgehäuse (30) vorgesehen ist; und
einen zusätzlichen Innenluftdurchgang (80), der die aus dem zusätzlichen Innenlufteinlass (37A, 37B, 37C) eingeleitete Innenluft in einen Bereich in dem Spiralgehäuse (12) einleitet, der weiter von dem Einlasskanal (13) weg liegt als der Kegelbereich (15) auf der Innenseite des peripheren Schaufelgitters des Laufrads (14).

2. Gebläse nach Anspruch 1, wobei
das Lufteinlassgehäuse (30) einen Filterstützbereich (36) umfasst, der einen Filter (35) stützt, wobei der zusätzliche Innenlufteinlass (37A, 37B) an einer Position vorgesehen ist, an der der zusätzliche Innenlufteinlass (37A, 37B) die Innenluft in einen Zwischenraum stromaufwärts des von dem Filterstützbereich gestützten Filters in dem Lufteinlassgehäuse (30) einleiten kann und die aus dem zusätzlichen Innenlufteinlass (37A, 37B) eingeleitete Innenluft durch den Filter (35) hindurchströmt und in den zusätzlichen Innenluftdurchgang (80) strömt.

3. Gebläse nach Anspruch 2, wobei
bei Betrachtung aus der Richtung einer Drehachse (Ax) des Laufrads ein Abschnitt des Spiralgehäuses (12) mit Ausnahme des Zufuhrkanals (120) allgemein spiralförmig ist, das Lufteinlassgehäuse (30) allgemein viereckig ist, drei Eckabschnitte des Lufteinlassgehäuses (30) außerhalb des Spiralgehäuses (12) vorragen und sich der zusätzliche Innenlufteinlass (80) entlang einer Außenfläche des Spiralgehäuses (12) von mindestens einem der drei Eckabschnitte des Lufteinlassgehäuses (30), die außerhalb des Spiralgehäuses (12) vorragen, erstreckt.

4. Gebläse nach Anspruch 3, wobei
der zusätzliche Innenlufteinlass (80) zwei oder drei Durchgangsabschnitte (82A, 82B) umfasst und sich die Durchgangsabschnitte (82A, 82B) entlang der Außenfläche des Spiralgehäuses (12) von zwei oder drei Eckabschnitten aus den drei Eckabschnitten des Lufteinlassgehäuses (30), die außerhalb des Spiralgehäuses (12) vorragen, erstrecken.

5. Gebläse nach Anspruch 3, das ferner den allgemein viereckigen Filter (35) umfasst, der von dem Filterstützbereich gestützt wird, wobei eine Öffnung (83A, 83B) in einem stromaufwärtigen Ende des zusätzlichen Innenluftdurchgangs (80) vorgesehen ist und ein Trennglied (350), das einen Eckbereich des Filters, der die Öffnung (83A, 83B) überlagert, von einem mittigen Bereich, der bei Betrachtung aus der Richtung der Drehachse (Ax) des Laufrads näher an einer mittigen Seite des Filters als der Eckbereich liegt, abtrennt, in dem Filter (35) vorgesehen ist.

## Revendications

1. Ventilateur employé dans un système de climatisation de véhicule, comprenant :
une roue (14) comprenant une pluralité d'aubes (140) qui forment une cascade périphérique et entraînée en rotation par un arbre rotatif (160) d'un moteur (16), la pluralité d'aubes comportant une première partie axiale (141) adjacente au moteur dans une direction axiale de l'arbre rotatif et une seconde partie axiale (142) plus éloignée du moteur que la première partie axiale ;
une volute (12) comprenant un espace intérieur qui loge la roue (14), un orifice d'entrée (13) ouvert dans la direction axiale de l'arbre rotatif, et un orifice de refoulement (120) ouvert dans une direction périphérique de la roue ;
une paroi de séparation (18) qui divise une région entre une surface périphérique intérieure de la volute et une surface périphérique extérieure de la roue et un espace intérieur de l'orifice de refoulement (120) dans l'espace intérieur de la volute (12) dans la direction axiale afin de former un premier passage d'écoulement d'air (19) et un second passage d'écoulement d'air (20) ;
un carter d'admission d'air (30) comportant un espace intérieur communiquant avec l'orifice d'entrée (13) de la volute (12), au moins une admission d'air extérieur (31) destinée à acheminer de l'air extérieur vers l'espace intérieur du carter d'admission d'air et au moins une admission d'air intérieur (32) destinée à acheminer de l'air intérieur vers l'espace intérieur du carter d'admission d'air étant prévues dans le carter d'admission d'air (30) ;
au moins un volet de commutation (40A, 40B, 40C) qui ouvre et ferme l'admission d'air extérieur (31) et l'admission d'air intérieur (32) ;
un tube de séparation (50) s'étendant à travers l'orifice d'entrée (13) de la volute (12), le tube de séparation comprenant une ouverture d'écoulement entrant (51) dans le carter d'admission d'air (30) pour faire entrer de l'air dans le tube de séparation et une ouverture d'écoulement sortant (52) située intérieurement vis-à-vis de la cascade périphérique de la roue (14) à l'intérieur de la volute (12) pour faire sortir l'air de l'intérieur du tube de séparation, et le tube de séparation (50) étant conçu de telle sorte que l'air introduit dans la volute (12) par le biais de l'ouverture d'écoulement sortant (52) du tube de séparation soit guidé jusqu'au premier passage d'écoulement d'air (19) de la volute (12) par le biais de la première partie axiale (141) des aubes de la roue (14), et que l'air introduit dans la volute (12) par un côté extérieur du tube de séparation (50) et un côté intérieur de l'orifice d'entrée (13) soit guidé jusqu'au second passage d'écoulement d'air (20) par le biais de la seconde partie axiale (142) des aubes de la roue (14) ; et
une section conique (15) qui est prévue dans la roue (14) et qui dévie l'air s'écoulant depuis l'ouverture d'écoulement sortant (52) du tube de séparation (50) vers un côté intérieur de la cascade périphérique de la roue (14) en direction de la première partie axiale (141) des aubes de la roue (14),
le ventilateur étant **caractérisé en ce qu'**il comprend en outre :
au moins une entrée d'air intérieur auxiliaire (37A, 37B, 37C) prévue dans la volute (12) et/ou le carter d'admission d'air (30) ; et
un passage d'air intérieur auxiliaire (80) introduisant l'air intérieur introduit par l'entrée d'air intérieur auxiliaire (37A, 37B, 37C) dans une région à l'intérieur de la volute (12) plus éloignée de l'orifice d'entrée (13) que la section conique (15) sur le côté intérieur de la cascade périphérique de la roue (14).

2. Ventilateur selon la revendication 1, dans lequel
le carter d'admission d'air (30) comprend une section de support de filtre (36) qui supporte un filtre (35), l'entrée d'air intérieur auxiliaire (37A, 37B) se trouve à un emplacement au niveau duquel l'entrée d'air intérieur auxiliaire (37A, 37B) peut introduire l'air intérieur dans un espace en amont du filtre supporté par la section de support de filtre à l'intérieur du carter d'admission d'air (30), et l'air intérieur introduit par l'entrée d'air intérieur auxiliaire (37A, 37B) passe à travers le filtre (35) et s'écoule dans le passage d'air intérieur auxiliaire (80).

3. Ventilateur selon la revendication 2, dans lequel
selon une vue depuis une direction d'un axe de rotation (Ax) de la roue, une partie de la volute (12) à l'exclusion de l'orifice de refoulement (120) est globalement en spirale, le carter d'admission d'air (30) est globalement quadrangulaire, trois parties coins du carter d'admission d'air (30) font saillie à l'extérieur de la volute (12), et le passage d'air intérieur auxiliaire (80) s'étend le long d'une surface extérieure de la volute (12) à partir d'au moins une des trois parties coins du carter d'admission d'air (30) faisant saillie à l'extérieur de la volute (12).

4. Ventilateur selon la revendication 3, dans lequel
le passage d'air intérieur auxiliaire (80) comprend deux ou trois parties de passage (82A, 82B), et les parties de passage (82A, 82B) s'étendent le long de la surface extérieure de la volute (12) à partir de deux des trois ou à partir des trois parties coins du carter d'admission d'air (30) faisant saillie à l'extérieur de la volute (12).

5. Ventilateur selon la revendication 3, comprenant en outre
le filtre globalement quadrangulaire (35) supporté par la section de support de filtre, une ouverture (83A, 83B) étant prévue dans une extrémité amont du passage d'air intérieur auxiliaire (80), et un élément de séparation (350), qui sépare une région de coin du filtre superposée à l'ouverture (83A, 83B) d'une région côté centre située plus près d'un côté centre du filtre que la région de coin selon la vue depuis la direction de l'axe de rotation (Ax) de la roue, étant prévu dans le filtre (35).
